(19) Europäisches Patentamt
European Patent Office
Office européen des brevets

(11) **EP 4 509 884 A1**

(12) **EUROPEAN PATENT APPLICATION**
published in accordance with Art. 153(4) EPC

(43) Date of publication:
**19.02.2025 Bulletin 2025/08**

(51) International Patent Classification (IPC):
**G02B 1/10** *(2015.01)*      **G03B 21/60** *(2014.01)*

(21) Application number: **23787827.7**

(86) International application number:
**PCT/CN2023/088357**

(22) Date of filing: **14.04.2023**

(87) International publication number:
**WO 2023/198185 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.04.2022   CN 202210389255**

(71) Applicant: **Fuyao Glass Industry Group Co., Ltd.**
**Fuzhou, Fujian 350300 (CN)**

(72) Inventors:
• **ZHANG, Qi**
  **Fuzhou, Fujian 350300 (CN)**

• **ZHANG, Hui**
  **Fuzhou, Fujian 350300 (CN)**
• **ZHANG, Fei**
  **Fuzhou, Fujian 350300 (CN)**
• **CHEN, Lidong**
  **Fuzhou, Fujian 350300 (CN)**
• **LI, Weijun**
  **Fuzhou, Fujian 350300 (CN)**
• **GUAN, Jinliang**
  **Fuzhou, Fujian 350300 (CN)**

(74) Representative: **Patentanwälte Olbricht Buchhold Keulertz**
**Partnerschaft mbB**
**Neue Mainzer Straße 75**
**60311 Frankfurt am Main (DE)**

(54) **PHOTONIC FILM AND TRANSPARENT PROJECTION DISPLAY GLASS**

(57)      The present disclosure provides a photonic film and a transparent projection display glass, in which the photonic film is cut into at least two parts, and in which a spherical ratio of any part is not greater than a threshold. The transparent projection display glass comprises a first outer sheet glass, a first adhesive layer, a photonic film, a second adhesive layer and a second outer sheet glass stacked in sequence. The photonic film provided by the present disclosure can be well bonded with other films, and greatly weaken the wrinkle phenomenon of the photonic film caused by a large curvature profile. In addition, by adopting the above photonic film, the transparent projection display glass provided by the present disclosure can greatly reduce the serious wrinkles at the edges of the photonic film therein caused by the poor ductility after film lamination, on the premise of ensuring the projection effect.

FIG.6

EP 4 509 884 A1

**Description**

TECHNICAL FIELD

The present disclosure relates to the technical field of special glass products, and particularly to the technical field of the lamination of photonic films and glass, and specifically to a photonic film and a transparent projection display glass.

BACKGROUND

In the prior art, there is a photonic film which can be used for projection display and allows light to propagate therethrough, and the principle of the photonic film is to use the artificial microstructures formed by periodic arrangement of media with different refractive indexes, and use the high refection effect of the photonic film on the visible light band to improve the display performance. However, the existing photonic film has poor ductility and can only be used for the glass products with a relatively flat profiles. For the glass products with a large profile (spherical ratio ≥35), when the whole projection photonic film is used for production, the photonic film will be seriously wrinkled at the edges after lamination, which greatly affects the aesthetics and light transmittance of related products of the photonic film, and then affects the projection imaging effect.

SUMMARY

Aiming at the problems in the prior art, a photonic film provided by the present disclosure can be well laminated with other films, and greatly reduce the wrinkle phenomenon of the photonic film caused by a large curvature profile. In addition, by adopting the above photonic film, a transparent projection display glass provided by the present disclosure can greatly reduce the serious wrinkles of the photonic film at the edges after lamination caused by the poor ductility after film lamination, on the premise of ensuring the projection effect.

In order to solve the above technical problems, the present disclosure provides the following technical solutions:

The present disclosure provides a photonic film, which is cut into at least two parts, in which a spherical ratio of any part is not greater than a threshold.

In an embodiment, spacing between the adjacent parts after cutting is a set distance.

In an embodiment, connecting blocks are disposed between the adjacent parts after cutting.

In an embodiment, a length of the connecting block is 5 mm to 10 mm.

In an embodiment, the connecting blocks satisfy the following relational expression:

$$0.1\% \leqslant w \times s/(L-w \times n) \times s \leqslant 5\%;$$

where w represents a length of each connecting block, n represents the number of the connecting blocks, L represents a cutting direction length, and s represents spacing between the adjacent parts.

In an embodiment, the number of the connecting blocks is 4 to 5.

In an embodiment, spacing between the adjacent parts is not more than 2 mm.

In an embodiment, the spacing between the adjacent portions is 50 $\mu$m to 1 mm.

In an embodiment, the threshold ranges from 0.02 to 0.035.

In another aspect, the present disclosure further provides a transparent projection display glass manufactured with the photonic film, the transparent projection display glass comprising:

a first outer sheet glass, a first adhesive layer, the photonic film, a second adhesive layer and a second outer sheet glass stacked in sequence.

In a third aspect, the present disclosure further provides an automobile, comprising the transparent projection display glass which is to be mounted on at least one of a skylight, a side window, a front windshield window and a rear windshield window of the automobile.

As can be seen from the above description, the embodiments of the present disclosure provide a photonic film and a transparent projection display glass. The corresponding photonic film is cut into at least two parts, in which a spherical ratio of any part is not greater than a threshold. The corresponding transparent projection display glass comprises a first outer sheet glass, a first adhesive layer, a photonic film, a second adhesive layer and a second outer sheet glass stacked in sequence. The photonic film provided by the present disclosure can be well laminated with other films, and the wrinkle phenomenon caused by the large curvature profile of the photonic film can be greatly weakened. In addition, by adopting the above photonic film, the transparent projection display glass provided by the present disclosure can greatly reduce the serious wrinkles at the edges of the photonic film therein caused by the poor ductility after film lamination, on the premise of ensuring the projection effect.

BRIEF DESCRIPTION OF THE DRAWINGS

In order to explain the technical solutions in the embodiments of the present disclosure or in the prior art more clearly, the drawings required for describing the embodiments or the prior art will be briefly introduced as follows. Obviously, the drawings involved in the following description merely illustrate some embodiments of the present disclosure, and persons of ordinary skill in the art can obtain other drawings from these drawings without paying any creative effort.

FIG. 1 illustrates a schematic diagram of a working principle of a transparent projection film product according to an embodiment of the present disclosure;
FIG. 2 illustrates a schematic diagram of a wrinkle defect according to an embodiment of the present disclosure;
FIG. 3 illustrates a structural diagram of a photonic film according to an embodiment of the present disclosure;
FIG. 4 illustrates a schematic diagram of a spherical ratio in a vertical direction according to an embodiment of the present disclosure;
FIG. 5 illustrates a schematic diagram of a spherical ratio in a horizontal direction ratio according to an embodiment of the present disclosure;
FIG. 6 illustrates a schematic diagram of a photonic film before cutting (a spherical ratio in a horizontal direction) according to an embodiment of the present disclosure;
FIG. 7 illustrates a schematic diagram of a photonic film after cutting (a spherical ratio in a horizontal direction) according to an embodiment of the present disclosure;
FIG. 8 illustrates a schematic diagram of a position of a connecting block (not completely cut) according to an embodiment of the present disclosure;
FIG. 9 illustrates a structural diagram of a connecting block according to an embodiment of the present disclosure;
FIG. 10 illustrates a structural diagram 1 of a transparent projection display glass according to an embodiment of the present disclosure; and
FIG. 11 illustrates a structural diagram 2 of a transparent projection display glass according to an embodiment of the present disclosure.

Reference numerals:

1: projector;
2: transparent projection film;
3: external image;
4: first outer sheet glass;
5: first adhesive layer;
6: photonic film;
6-1: photonic film first part
6-2: photonic film second part
7: second adhesive layer;
8: second outer sheet glass.

DETAILED DESCRIPTION OF THE EMBODIMENTS

In order that the objectives, technical solutions and advantages of the embodiments of the present disclosure are clearer, the embodiments of the present disclosure will be further described in detail with reference to the drawings. Here, the exemplary embodiments of the present disclosure and the descriptions thereof are used to explain the present disclosure, rather than as limitations thereto. Obviously, those described are only a part, rather than all, of the embodiments of the present disclosure. Based on the embodiments of the present disclosure, any other embodiment obtained by persons of ordinary skill in the art without paying any creative effort should fall within the protection scope of the present disclosure.

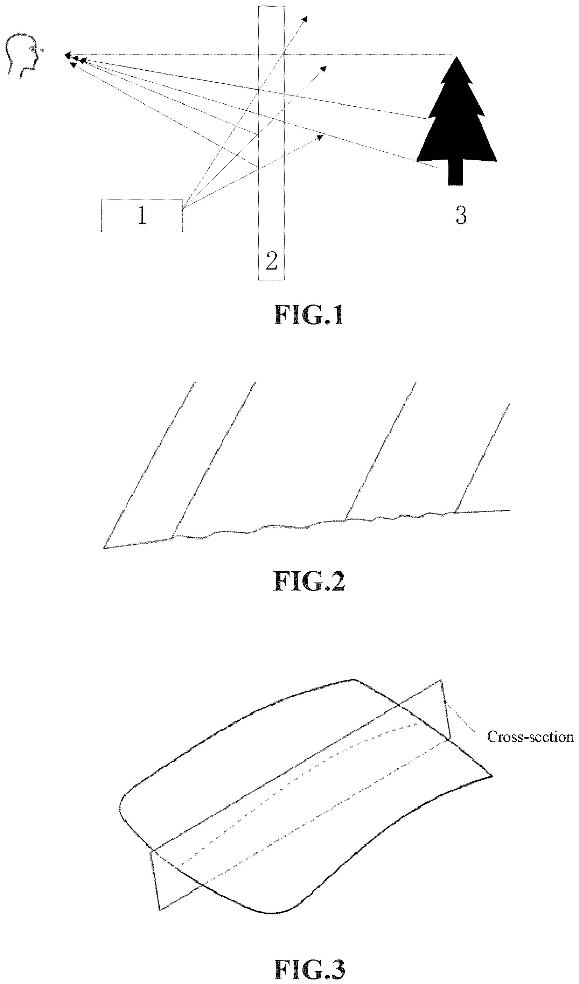

In the prior art, the working principle of the film with both a transparent function and a projection display function (using the artificial microstructures formed by periodic arrangement of media with different refractive indexes to improve the display performance through the high reflection effect on the visible light band) is illustrated in FIG. 1. As illustrated in FIG. 1, through the transparent projection film 2, the user can observe both an image projected by a projector 1 and an external image 3, so the transparent projection film 2 is more and more used in various scenes, and can provide the audiences with an excellent visual experience and a shocking image effect.

However, in the manufacturing process of the above product, since the core film-photonic film therein has poor ductility, when the product is laminated with any other film, serious wrinkles often occur at the edges after lamination (see FIG. 2), which greatly affects the aesthetics and light transmission effect of the product.

Based on the above technical difficulties, referring to FIG. 3, firstly, an embodiment of the present disclosure provides a photonic film which is partitioned into at least two parts, in which the spherical ratio of any part is not greater than a threshold.

It can be understood that a gap between adjacent parts of the photonic film having been partitioned can have the function of an "air channel", so as to alleviate and weaken serious wrinkles occurring at the edges of the photonic film after film lamination. However, if the gap is too large, although it is beneficial to solve the problem of the "wrinkles", there are dark lines in the projected image observed by human eyes after film lamination, which is adverse to the aesthetics and affects the projection effect. On the other hand, if the gap is too small, although it is beneficial to the aesthetics (i.e., no dark line will be observed by human eyes in the projected image after film lamination), it is adverse to air conduction, and the "wrinkle" phenomenon may easily occur. Therefore, the width of the gap here should be determined reasonably by persons skilled in the art by means of experiments.

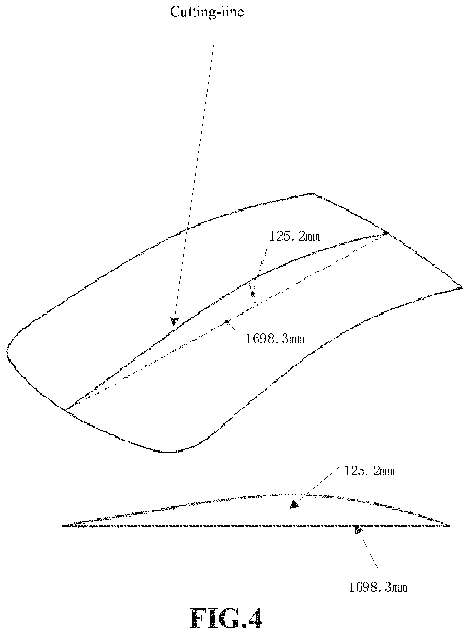

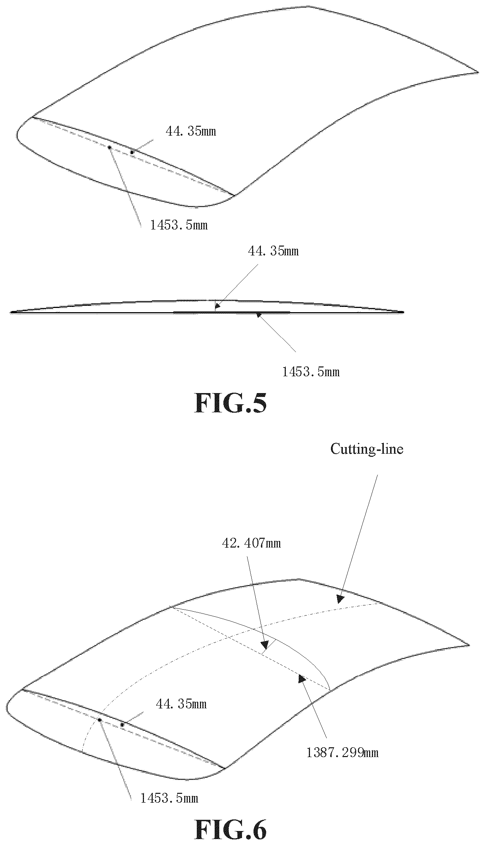

Referring to FIG. 4, the spherical ratio here refers to a ratio (dimensionless) of a height of a section to a distance between two ends of the section when the photonic film is cut along a direction. For example, the spherical ratio in FIG. 4 is 125.2 mm/1698.3 mm = 0.0737. It should be noted that the same photonic film may have different spherical ratios in different directions. Specifically, the photonic film is cut along a vertical direction in FIG. 4, and the spherical ratio is $V_1$ = 125.2 mm/1698.3 mm = 0.0737; and the photonic film is cut along a horizontal direction in FIG. 5, and the spherical ratio is $H_1$ = 44.35 mm/1453.5 mm = 0.0305. In addition, even in the same direction, different parts of the photonic film may have different spherical ratios. As illustrated in FIG. 6, the spherical ratio of an end portion is 44.35 mm/1453.5 mm = 0.035, and the spherical ratio of a middle portion is 42.407 mm/1367.299 mm = 0.031.

During processing, the outline of the photonic film may be cut using a precision cutting device, and several connecting blocks are selected at intervals, so as to achieve the purpose of reducing or even avoiding the wrinkle defect after the photonic film is laminated, and ensure the gap of the film to be small.

It can be understood that the spherical ratio of any part of the photonic film after cutting is necessarily smaller than that of the photonic film before cutting. By utilizing this property (and appropriately controlling the distance between adjacent parts of the photonic film after cutting), the photonic film can be well laminated with any other film.

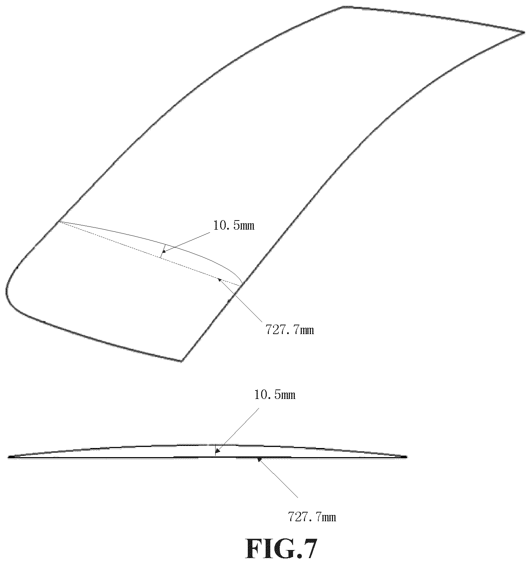

FIG. 7 illustrates a schematic diagram of a part of the photonic film in FIG. 6 cut along a cutting line (dotted line); The spherical ratio in the horizontal direction is recalculated as $H_2$ = 10.5 mm/727.7 mm = 0.0144 (at this time, the spherical ratio in the vertical direction does not change, i.e., the spherical ratio in the horizontal direction decreases when the photonic film is cut in the vertical direction, and similarly, the spherical ratio in the vertical direction decreases when the photonic film is cut in the horizontal direction). It is clear that after cutting, the spherical ratio in the horizontal direction is obviously reduced (from 0.0305 to 0.0144). After actual lamination operation, the spherical ratio in the horizontal direction at this time has completely met the process requirement of stacking the photonic film and the adjacent film, and greatly weakened the wrinkle phenomenon caused by the problem of large curvature profile of the photonic film.

In an embodiment, the spacing between the adjacent parts after cutting is a set distance. It can be understood that the set distance should not be too large, for the purpose of making it difficult for naked eyes to identify the visual defect caused by the gap at the junction of the cut photonic film, so as to ensure the projection imaging effect.

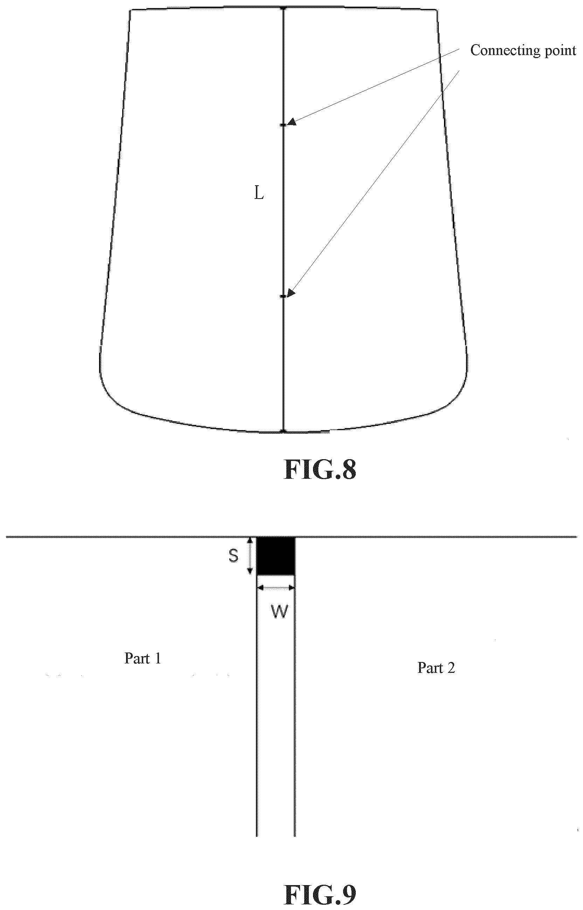

In an embodiment, referring to FIG. 8, connecting blocks (indicated by the black spots in the figure) are disposed between the adjacent parts after cutting.

There are two cutting modes for the photonic film according to the embodiment of the present disclosure: complete cutting and incomplete cutting. The complete cutting means thoroughly cutting off adjacent parts of the photonic film, so that the adjacent parts are completely separated from each other.

The incomplete cutting means that there are connecting blocks (apparently severed but connected) between adjacent parts of the photonic film. It should be noted that the incomplete cutting here is not to cut by an amount less than the thickness of the photonic film, but to leave connecting blocks along the cutting direction.

In an embodiment, referring to FIG. 9, a length of the connecting block (s) is 5 mm to 10 mm.

In an embodiment, referring to FIG. 9, a length, a width (i.e., the distance between adjacent parts of the photonic film after cutting), the number and a cutting direction length of the connecting blocks should satisfy the following formula:

$$0.1\% \leqslant w \times s/(L - w \times n) \times s \leqslant 5\%;$$

where w represents a length of each connecting block, n represents the number of the connecting blocks, L represents a cutting direction length, and s represents spacing between the adjacent parts.

Exemplarily, the number of the connecting blocks is 4 to 5.

In an embodiment, the spacing between adjacent parts of the photonic film after cutting is not greater than 2 mm, and after many experiments, the applicant considers that the spacing not greater than 1 mm is better, because in this case, it is difficult for naked eyes to identify the visual defect caused by the gap at the junction of the film, and the projection imaging effect of the photonic film can be ensured.

Exemplarily, the spacing between adjacent parts is 50 $\mu$m to 1 mm.

In an embodiment, after many experiments, the applicant considers that the above threshold range (the spherical ratio of any part of the photonic film after cutting is not greater than this threshold) is appropriate at 0.02 to 0.035, and exemplarily, the spherical ratio of any part of the cut photonic film after cutting is optimal when being not greater than 0.02, because at this time, not only the process requirement of stacking the photonic film and the adjacent film can be met, but also the wrinkle phenomenon caused by the large curvature profile of the photonic film can be weakened.

Further, other parameters of the photonic film according to the embodiment of the present disclosure are given in Table 1:

Table 1

| Parameters | Ranges |
|---|---|
| Display brightness | Maximum brightness: 600 nits |
| Contrast | 20:1 (bright), 200:1 (dark) |
| Resolution | above 2K |
| Visual angle (half) | <30° |
| Transmittance | >70% |
| Haze | ~2% |

As can be seen from the above description, the embodiments of the present disclosure provide a photonic film which is cut into at least two parts, in which a spherical ratio of any part is not greater than a threshold. According to the present disclosure, the photonic film is cut off and then spliced to divide the original whole photonic film into two parts, so that the spherical ratio in the horizontal or vertical direction is reduced to below 0.02, and in conjunction with the limitation that the spacing between the adjacent parts is less than or equal to 1 mm, the visual defect caused by the gap at the junction of the photonic film will not be easily identified by naked eyes, and the projection imaging effect can also be ensured. On the other hand, the photonic film provided by the present disclosure can be well bonded with other films, and the wrinkle phenomenon caused by the large curvature profile of the photonic film can be greatly weakened.

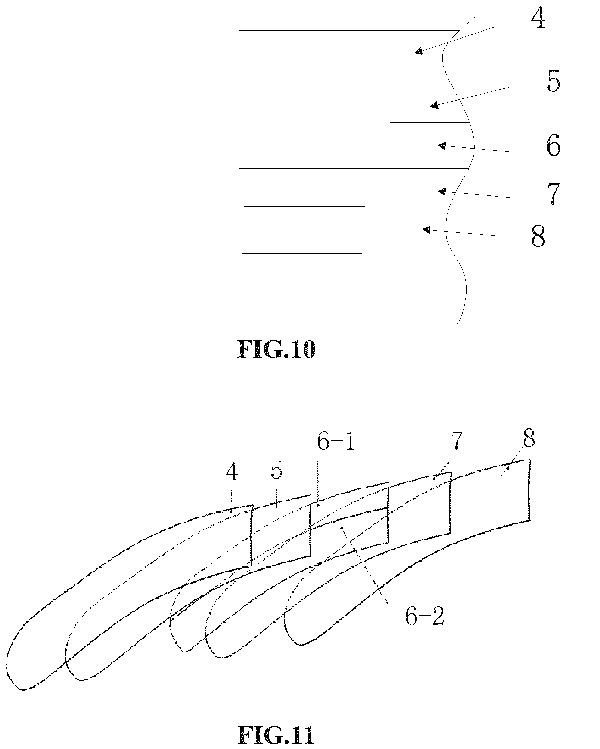

Referring to FIG. 10, based on the photonic film, an embodiment of the present disclosure further provides a transparent projection display glass, which includes a first outer sheet glass 4, a first adhesive layer 5, a photonic film 6, a second adhesive layer 7 and a second outer sheet glass 8 stacked in sequence.

Exemplarily, the first adhesive layer 5 and the second adhesive layer 7 are made of a polyvinyl butyral resin (PVB) interlayer. It can be understood that the first adhesive layer 5 and the second adhesive layer 7 may also be made of other materials, such as ethylene vinyl acetate copolymer (EVA), which is not limited herein.

Next, referring to FIG. 11, the photonic film in the transparent projection display glass according to the embodiment of the present disclosure may include a plurality of parts (a photonic film first part 6-1 and a photonic film second part 6-2),which can be bonded with the PVB interlayer after being cut. It can be understood that the bonding process difficulty of the photonic film in such a design will be greatly decreased, and on the premise of ensuring the projection effect, the serious wrinkles at the edges of the photonic film caused by the poor ductility after film lamination can be greatly reduced.

In an embodiment, the present disclosure further provides an automobile, which includes the transparent projection display glass to be mounted on at least one from a group of a skylight, a side window, a front windshield window and a rear windshield window of the automobile.

The transparent projection display glass mounted on the automobile according to the above embodiment can bring news, entertainment videos, information reading and necessary information prompts to the passengers in the automobile without affecting the passengers' sight to the outside of the automobile, i.e., without affecting the function of the window, and it is possible to put some advertisements (similar to the screen advertisements in elevators).

It can be understood that the transparent projection display glass may also be used in the application scenarios such as the glasses of a subway window, a train window, a bus window, a ship indoor window and windows on either side of an aircraft cabin.

As can be seen from the above description, the embodiment of the present disclosure provides a transparent projection display glass, which includes a first outer sheet glass, a first adhesive layer, a photonic film, a second adhesive layer and a second outer sheet glass stacked in sequence. By adopting the above photonic film, the transparent projection display glass provided by the present disclosure can greatly reduce the serious wrinkles at the edges of the photonic film therein caused by the poor ductility after film lamination, on the premise of ensuring the projection effect.

In the description of the present disclosure, it should be understood that an orientation or positional relationship indicated by the term "central", "longitudinal", "transverse", "upper", "lower", "front", "back", "left", "right", "vertical", "horizontal", "top", "bottom", "inner", "outer" or the like is based on that illustrated in the drawings, and is only for the convenience of describing the present disclosure and simplifying the description, rather than indicating or implying that a referred device or element must have a specific orientation, or must be constructed and operated in a specific orientation, and the above term cannot be understood as a limitation to the present disclosure.

In addition, the terms such as "first", "second", etc. are only used for descriptive purposes, and cannot be understood as indicating or implying relative importance or implicitly specifying the number of the indicated technical features. Therefore, features defined with "first", "second", etc. can explicitly or implicitly include one or more of these features. In the description of the present disclosure, unless otherwise specified, "a plurality of" means two or more.

Descriptions referring to the terms such as 'an embodiment', 'a specific embodiment', 'some embodiments', 'for example', 'an example', 'a specific example' or 'some examples' mean that the specific features, structures, materials or characteristics described in connection with the embodiment(s) or example(s), are included in at least one embodiment or example of the present disclosure. In the present disclosure, the schematic expressions of the above terms do not necessarily refer to a same embodiment or example. Further, the specific features, structures, materials or characteristics described may be combined in any one or more embodiments or examples in a suitable manner. The sequence of steps involved in each embodiment is used to schematically illustrate the implementation of the present disclosure, and is not limited herein and can be appropriately adjusted as needed.

In the description of the present disclosure, it should be noted that unless otherwise expressly specified and limited, a term such as "mount", "connect" or the like should be broadly understood, and for example, it may be a fixed connection, a detachable connection, an integrated connection, a mechanical connection, an electrical connection, a direct connection, an indirect connection through an intermediate medium, or a communication between the interiors of two elements. For persons of ordinary skill in the art, the specific meanings of the above terms in the present disclosure can be understood according to the specific situations.

The specific embodiments described above make further detailed explanations to the objectives, technical solutions and advantageous effects of the present disclosure. It should be understood that those described above are only specific embodiments of the present disclosure and rather than limitations to the protection scope of the present disclosure. Any modification, equivalent substitution or improvement made within the spirit and principle of the present disclosure should fall within the protection scope of the present disclosure.

**Claims**

1. A photonic film, which is cut into at least two parts, wherein a spherical ratio of any part is not greater than a threshold; connecting blocks are disposed between the adjacent parts after cutting; the spherical ratio is a ratio of a height of a section to a distance between two ends of the section when the photonic film is cut along a direction.

2. The photonic film according to claim 1, wherein spacing between the adjacent parts after cutting is a set distance.

3. The photonic film according to claim 1, wherein a length of the connecting block is 5 mm to 10 mm.

4. The photonic film according to claim 3, wherein the connecting blocks satisfy the following relational expression:

$$0.1\% \leqslant w \times s/(L-w \times n) \times s \leqslant 5\%;$$

where w represents a length of each connecting block, n represents the number of the connecting blocks, L represents a cutting direction length, and s represents spacing between the adjacent parts.

5. The photonic film according to any of claims 1, 3 or 4, wherein the number of the connecting blocks is 4 to 5.

6. The photonic film according to claim 1 or 2, wherein spacing between the adjacent parts is not more than 2 mm.

7. The photonic film according to claim 6, wherein the spacing between the adjacent portions is 50 $\mu$m to 1 mm.

8. The photonic film according to claim 1, wherein the threshold ranges from 0.02 to 0.035.

9. A transparent projection display glass, comprising a first outer sheet glass, a first adhesive layer, the photonic film according to any of claims 1 to 8, a second adhesive layer and a second outer sheet glass stacked in sequence.

10. An automobile, comprising the transparent projection display glass according to claim 9, which is to be mounted on at least one of a skylight, a side window, a front windshield window and a rear windshield window of the automobile.

FIG.1

FIG.2

Cross-section

FIG.3

Cutting-line

125.2mm

1698.3mm

125.2mm

1698.3mm

**FIG.4**

44.35mm

1453.5mm

44.35mm

1453.5mm

**FIG.5**

Cutting-line

42.407mm

44.35mm

1387.299mm

1453.5mm

**FIG.6**

FIG.7

**FIG.8**

**FIG.9**

4

5

6

7

8

**FIG.10**

6-1        7        8

4    5

6-2

**FIG.11**

<table>
<tr><td colspan="2"><strong>INTERNATIONAL SEARCH REPORT</strong></td><td>International application No.<br><strong>PCT/CN2023/088357</strong></td></tr>
</table>

**A.    CLASSIFICATION OF SUBJECT MATTER**

G02B 1/10(2015.01)i;  G03B21/60(2014.01)i

According to International Patent Classification (IPC) or to both national classification and IPC

**B.    FIELDS SEARCHED**

Minimum documentation searched (classification system followed by classification symbols)

IPC:G02B1/-; G03B21/-

Documentation searched other than minimum documentation to the extent that such documents are included in the fields searched

Electronic data base consulted during the international search (name of data base and, where practicable, search terms used)

CNTXT, CNKI, WPABS, DWPI, ENTXT: 福耀玻璃, 张琦, 张辉, 张飞, 陈立东, 李炜军, 关金亮, 光子, 膜, 透明, 投影, 显示, 褶皱, 切, 割, 缝隙, 间隙, photon+, film+, transparent+, project+, display+, space+, cut+, wrinkl+

**C.    DOCUMENTS CONSIDERED TO BE RELEVANT**

| Category* | Citation of document, with indication, where appropriate, of the relevant passages | Relevant to claim No. |
|---|---|---|
| PX | CN 114740551 A (FUYAO GLASS INDUSTRY GROUP CO., LTD.) 12 July 2022 (2022-07-12)<br>description, paragraphs [0003]-[0073], and figures 1-11 | 1-10 |
| X | JP 2022042850 A (KOBE MEISTER CO., LTD. et al.) 15 March 2022 (2022-03-15)<br>description, paragraphs [0004]-[0023], and figures 1-5 | 1-8 |
| Y | JP 2022042850 A (KOBE MEISTER CO., LTD. et al.) 15 March 2022 (2022-03-15)<br>description, paragraphs [0004]-[0023], and figures 1-5 | 9-10 |
| Y | CN 214427723 U (FUYAO GLASS INDUSTRY GROUP CO., LTD.) 19 October 2021 (2021-10-19)<br>description, paragraphs [0005]-[0038], and figure 1 | 9-10 |
| A | CN 209000939 U (CHN ENERGY INVESTMENT GROUP CO., LTD. et al.) 18 June 2019 (2019-06-18)<br>entire document | 1-10 |
| A | CN 201886236 U (BEIJING ALL BRILLIANT TECHNOLOGY CO., LTD.) 29 June 2011 (2011-06-29)<br>entire document | 1-10 |

☑ Further documents are listed in the continuation of Box C.     ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **07 July 2023** | **12 July 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/088357** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 214427724 U (FUYAO GLASS INDUSTRY GROUP CO., LTD.) 19 October 2021 (2021-10-19) entire document | 1-10 |

Form PCT/ISA/210 (second sheet) (July 2022)

## INTERNATIONAL SEARCH REPORT
### Information on patent family members

| International application No. |
| --- |
| **PCT/CN2023/088357** |

| Patent document<br>cited in search report | | | Publication date<br>(day/month/year) | Patent family member(s) | Publication date<br>(day/month/year) |
| --- | --- | --- | --- | --- | --- |
| CN | 114740551 | A | 12 July 2022 | None | |
| JP | 2022042850 | A | 15 March 2022 | None | |
| CN | 214427723 | U | 19 October 2021 | None | |
| CN | 209000939 | U | 18 June 2019 | None | |
| CN | 201886236 | U | 29 June 2011 | None | |
| CN | 214427724 | U | 19 October 2021 | None | |

Form PCT/ISA/210 (patent family annex) (July 2022)